Europäisches Patentamt

European Patent Office

Office européen des brevets

(11) Publication number: **0 223 563**
**A2**

## (12) EUROPEAN PATENT APPLICATION

(21) Application number: 86308851.4

(22) Date of filing: 13.11.86

(51) Int. Cl.⁴: **C 02 F 1/00**
**E 04 H 3/20**

(30) Priority: 13.11.85 GB 8527984

(43) Date of publication of application:
27.05.87 Bulletin 87/22

(84) Designated Contracting States:
AT BE CH DE ES FR GB GR IT LI LU NL SE

(71) Applicant: BARR & WRAY LIMITED
324 Drumoyne Road
Glasgow, Scotland, G51 4DY (GB)

(72) Inventor: Watts, Derek James
74 Tudor Avenue
Worcester Park Surrey (GB)

(74) Representative: MacDougall, Donald Carmichael et al
Messrs. Cruikshank & Fairweather 19 Royal Exchange
Square
Glasgow G1 3AE, Scotland (GB)

(54) Swimming pool water treatment.

(57) Swimming pool water treatment apparatus (10) for treating ozonised water which is dosed with chlorine comprises a stainless steel containment vessel (11) incorporating a bed (13) of manganese dioxide through which water to be treated percolates. The manganese dioxide bed (13) selectively removes ozone from the water but leaves the chlorine content thereof substantially unaffected and does not electrochemically react with the stainless steel of the vessel (11).

## Description

### SWIMMING POOL WATER TREATMENT

This invention relates to swimming pool water treatment.

In modern swimming pools the pool water when 'pure' consists of fresh water dosed with disinfectant chemicals, the latter being provided to obviate or mitigate the effects of contaminants, such as urine, arising from the presence of bathers in the pool water. The effectiveness of the disinfectant chemicals clearly reduces as usage of the pool by bathers increases and there is, therefore, a need, either intermittently or continuously, to replace contaminated pool water with 'purified' pool water. Modern pools are therefore associated with a water treatment plant which draws off pool water, effects a treatment process thereon to remove the unwanted contaminants and the resultant purified pool water is thereafter returned to the pool.

In recent years the preferred purification system has been ozonisation/chlorination and the treatment plant has essentially effected a four-stage process, firstly of injecting ozone with appropriate time contact into the drawn-off pool water in order to oxidise soluble impurities and to render the water practically sterile, secondly, de-ozonisation in order to remove any residual ozone, thirdly, filtration to remove particulate contaminant matter, and, fourthly, re-dosing the sterile water with chlorine thereby to produce purified pool water.

The deozonisation stage in the known process has been effected by a variety of specialist materials which themselves have been subjected to special formative processes by the manufacturers to ensure their effectiveness in removing ozone.

The most common deozonising material which has been used hitherto has been carbon (in a variety of different forms) and whilst this material has good de-ozonising efficiency it has two adverse side-effects on the water treatment process. Firstly it tends to remove some or all of the chlorine content of the water drawn-off from the pool which is wasteful of chlorine and replacement chlorine is expensive. Secondly, it tends to react electrochemically with the containment vessel, which because of the ozone presence is made of stainless steel, so that in time the vessel collapses.

We have now discovered a de-ozonising material which is capable of selectively removing ozone whilst leaving the chlorine substantially unaffected and which when used in a stainless steel containment vessel does not react electrochemically therewith.

According to the present invention there is provided water treatment apparatus for treating ozonised water dosed with chlorine, said apparatus comprising a stainless steel containment vessel incorporating a bed of manganese dioxide arranged to permit water to be treated to percolate therethrough.

Preferably said manganese dioxide bed is supported by a layer of gravel.

Preferably said containment vessel is a filter chamber and said bed of manganese dioxide forms one layer of a layered bed, another of said layers being sand.

Preferably in said filter bed the layer of sand is disposed above the layer of manganese dioxide and water to be treated is delivered to the top surface of the filter bed whereby the sand layer removes particulate contaminants from the water prior to the water reaching the layer of manganese dioxide.

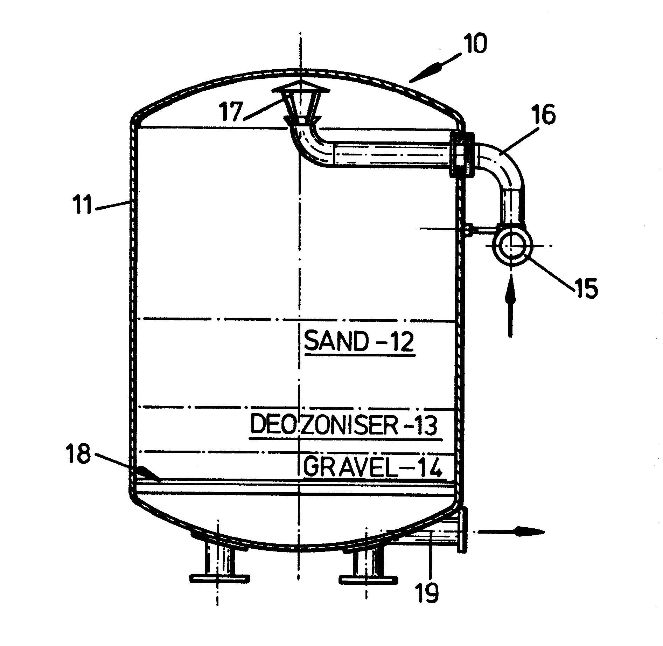

An embodiment of the present invention will now be described by way of example with reference to the accompanying drawing.

In the drawing a water treatment plant 10 comprises a stainless steel housing 11 the interior of which functions as a filter chamber containing a layer of sand 12 disposed above a layer of de-ozoniser material 13 which in turn is disposed above a layer of gravel 14. Water to be treated by plant 10 is caused to enter the chamber at port 15 formed in conduit 16 which terminates at an impingement baffle 17 causing water to flow downwardly through the filter chamber with a relatively even dispersion over the area of the chamber so that water to be treated is delivered to the top surface of sand layer 12 and percolates therethrough prior to reaching the layer of de-ozoniser layer 13 which, in accordance with the present invention, is in the form of manganese dioxide. The gravel layer 14 is supported by a nozzle plate 18 and water, after treatment, emerges from the gravel layer 14 and passes through the nozzles in plate 18 and is discharged from housing 11 via conduit 19.

As has been explained, in the environment of swimming pool water the water ot be treater is extracted from the swimmping pool and ozonised in order to oxidise soluble impurities. Following the ozonising process the water usually contains residual ozone and the pipework and housings through which such water flows is made of stainless steel which is resistant to attack by ozone. The water additionally contains a disinfectant chemical in the form of chlorine and the layer 13 of de-ozoniser material in the form of manganese dioxide removes excess ozone from the water but leaves the chlorine content thereof substantially unaffected, and because layer 13 is manganese dioxide as distinct from any other form of deozonising material electrochemical reaction between the de-ozoniser material and the stainless steel housing 11 is avoided.

It has been found that manganese dioxide used as the de-ozonising layer 13 is sufficiently efficient to provide de-ozonising of the water with a relatively shallow layer and typically the manganese dioxide layer is about half as thick as the superimposed layer of sand 12. Also it would be realised that the manganese dioxide layer 13 may be located initially above sand layer 12 and satisfactory operation of plant 10 will result, but to the relative specific gravities of the individual layers when the filter housing 11 is back-washed to clean the layers of contaminants the layers of de-ozoniser material and sand will invert so that the layer 12 of sand is located above the de-ozoniser layer.

It will be appreciated that the drawing is schematic and that for practical purposes various additional components may be required, such as provision of an air inlet connection beneath nozzle plate 18 for use in back-washing the filter bed when the plant is out of service. Also, although sand layer 12 is described for the purpose of removing particulate material this layer may be located in a separate housing.

In a preferred construction the housing 11 is made of low carbon (about 0.3%) stainless steel conforming to British Standard specification no.1449 316S12; the sand layer 12 has a grain size of the order 0.5-1.0 mm conforming to British Standard 16/30 and is of high silica (about 98%) low impurity content to Leighton Buzzard standard. Gravel layer 14 is preferably the same material as sand layer 12 but having a particle size of the order of 3 - 6 mm. De-ozoniser layer 13 may be pyrolusite ore having a grain size of the order of 0.5 - 1.0 mm (conforming to BS 16/30) and incorporating at least 75% pure manganese dioxide. By way of example when the layer 13 is the aforesaid pyrolusite material and the layer thickness is 200mm satisfactory deozonisation is effected on water flowing through the housing 11 at rates up to 25 m/hr.

**Claims**

1. Water treatment apparatus for treating ozonised water dosed with chlorine, said apparatus comprising a stainless steel containment vessel incorporating a bed of manganese dioxide arranged to permit water to be treated to percolate therethrough.

2. Water treatment apparatus according to claim 1, wherein said manganese dioxide bed is supported by a layer of gravel.

3. Water treatment apparatus as claimed in claim 1, wherein said containment vessel is a filter chamber and said bed of manganese dioxide forms one layer of a layered filter bed, another of said layers being sand.

4. Water treatment apparatus as claimed in claim 3, wherein said layer of sand is disposed above the layer of manganese dioxide and water to be treated is delivered to the top surface of the filter bed whereby the sand layer removes particulate contaminants from the water prior to the water reaching the layer of manganese dioxide.

0223563

SAND –12

DEOZONISER –13

GRAVEL –14